# EUROPEAN PATENT APPLICATION

(11) **EP 4 797 163 A1**
(43) Date of publication of application: **26.08.2026**
(21) Application number: 25159473.5
(22) Date of filing: 21.02.2025
(51) Int. Cl.: G06N 5/022, G06N 5/046, G06N 20/00

(54) **AIDING MACHINE LEARNING INFORMATION RETRIEVAL BY SYMBOLIC KNOWLEDGE REPRESENTATION**

(71) Applicant: ABB SCHWEIZ AG, 5400 Baden (CH)
(72) Inventor: SCHOCH, Nicolai, 69120 Heidelberg (DE); ASHIWAL, Virendra, 68542 Heddesheim (DE)
(74) Representative: Maiwald GmbH

(57) **Abstract**

A computer-implemented method (100) for retrieving a response (3) to a query (1) from a machine learning/artificial intelligence model, ML/Al model (2), the method (100) comprising the steps of:
• providing (110) the query (1) to the ML/Al model (2), thereby obtaining an initial response (3);
• determining (120), from the initial response (3), instances of concepts (5*) of a given symbolic knowledge representation (4) that the initial response (3) relates to;
• marking (130), in the symbolic knowledge representation (4), each concept (5*) that the initial response (3) relates to as instantiated;
• determining (140), by a reasoning engine (6), concepts (5#) of the symbolic knowledge representation (4) that, given the set of presently instantiated concepts (5*), need to be instantiated as well;
• determining (150) a supplemental query (1*) for information relating at least one concept (5#) that needs to be instantiated as well; and
• providing (160) this supplemental query (1*) to the ML/Al model (2), thereby obtaining a supplemental response (3*) that augments the initial response (3).

## Description

### FIELD OF THE INVENTION

The invention relates to the use of machine learning/artificial intelligence models, ML/Al models, for industrial applications, such as retrieving information about an industrial plant, industrial assets thereof, or an industrial process that is being executed on the industrial plant.

### BACKGROUND

A complex industrial plant, and the industrial assets that make up this industrial plant, are characterized by a large amount of information. This information is scattered across many information sources. For example, each industrial asset comes with technical documentation that details the capabilities of this asset and provides instructions how to use it. The concrete behaviour of an industrial asset in a particular industrial plant is characterized by configuration information of this asset. The industrial plant as a whole is described by further technical information, such as process and instrumentation diagrams, P&ID.

Looking up a desired piece of information, such as which functionalities one particular asset provides or to which other assets it is connected, manually is tedious and error-prone. There is a desire to retrieve this information in an automated manner. Therefore, machine learning/artificial intelligence models, ML/Al models, such as generative machine learning models, GMLMs, may be used to ingest the available information and process it into a suitable response to a query from the user.

However, it may happen that the response is correct as such, but not complete enough for doing useful work with it in an industrial context.

### OBJECTIVE OF THE INVENTION

It is therefore an objective of the invention to allow for a retrieval of information in an industrial context using ML/Al models in a manner that the responses become richer in content.

This objective is achieved by a computer-implemented method for retrieving a response to a query from a machine learning/artificial intelligence model, ML/Al model, according to the independent claim.

### DISCLOSURE OF THE INVENTION

The invention provides a computer-implemented method for retrieving a response to a query from a machine learning/artificial intelligence model, ML/Al model. The ML/AI model may comprise analytical models, generative machine learning models, GMLM, or any suitable combination thereof. For example, the task of object detection or symbol classification may be done using a purely analytical AI/ML model, but also with an AI/ML model that uses generative Al, such as a vision transformer, ViT.

For example, the EDF system (the engineering data funnel) that will be discussed later is an Al, which is based on both analytical AND generative AI. There are analytical Al parts, e.g., responsible of analyzing named-entities in a text, or of detecting objects/symbols in a topology image... And there are also generative Al components, e.g., responsible of generating a hierarchical list of the found entities/components/symbols, and of making it consistent with a pre-defined schema.

For example, a GMLM as ML/Al model may be a large language model, LLM, or a small language model, SLM. In particular, such language models may predict, given a sequence of words or other textual items, next words or textual items in the sequence. In this manner, the language model may produce a long text, such as an explanation asked for in a query, piece by piece. A ML/Al model may also accept images, such as process and instrumentation diagrams, P&IDs, as input. The ML/Al model may even be a multi-modal model that accepts both text and images, and optionally even further kinds of modalities or media, as input.

In the course of the method, the query is provided to the ML/Al model. In this manner, an initial response is obtained.

From the initial response, instances of concepts (such as entities) of a given symbolic knowledge representation that the initial response relates to are determined. That is, the symbolic knowledge representation is a collection of concepts that are relevant to the application at hand. Depending on the level of maturity that this representation has, i.e., on the level of complexity that is used to describe it, it may contain relationships and interconnections between the concepts.

Of each concept in the given symbolic representation, there may be zero, one or more instances. Figuratively speaking, each concept has a rack on which, for each instance of this concept, a card with instance-specific information may be placed. This instance-specific information complements the information stored in the symbolic knowledge representation that is equally valid for all instances of the respective concept.

In the symbolic representation, each concept that the initial response relates to at some point is marked as instantiated (that is, may be understood as populated). In particular, there may be more than one mentioning, reference or other relationship between the initial response on the one hand, and a particular concept on the other hand. Thus, there may be several instances of one and the same concept. In the figurative analogy presented above, each instance corresponds to one card on the rack corresponding to the respective concept.

Using a reasoning engine, concepts of the symbolic knowledge representation that, given the set of presently instantiated concepts, need to be instantiated as well are determined. A supplemental query is then determined for information relating at least one such concept that needs to be instantiated as well. This supplemental query is provided to the ML/Al model, whereupon the ML/Al model provides a supplemental response that may, in particular, come from a generative part of the ML/Al model. This supplemental response augments the initial response.

At the same time, by virtue of the obtained supplemental response, the symbolic knowledge representation is not static anymore. Rather, it gradually/dynamically grows, inspired and triggered by "whatever can be asked or completed". This can also include an optional feature to extend the ontological information model (IM) itself, i.e., not only populate it towards a dense knowledge graph (KG), but extend the set of ontological concepts and relations.

The inventors have found that the advantage of this method is at least three-fold.

First, by means of one or more supplemental queries, the ML/Al model gets a better notion of what content is needed in the response. In other words, the initial query may be too generic, and the ML/Al model may not be able to infer which aspects of a possible response the user is mainly after.

In a toy example, one might provide a ML/Al model with the generic question "What is the weather today?" Without any further information, the response might be of the kind, "The weather is generally nice today. It's nice and warm in California, with tender winds from the west. In Europe, there is a cold front coming up from the south-west, bringing cold temperatures around 5-10 degrees Celsius. And in Hongkong, we're facing heavy storms and monsoon rains." All of this may be true, but not useful for a user who is at a very specific location. But if the question is enhanced to "What is the weather today in Heidelberg, Germany?", the response can be made more pertinent to the actual location of the user.

In particular, in an industrial setting, the AI/ML model may have no way of knowing other concepts that need to be instantiated as well. Publicly available stock AI/ML models are usually trained on a large dataset of publicly available information. The information in the symbolic knowledge representation may not have been available during the training of the Al/ML model. Even if it was available during the training, it may have changed because, e.g., the composition of an industrial plant may change on a shorter time scale than the time scale on which the very expensive re-training of a Al/ML model is repeated.

Second, AI/ML models may have quantitative limitations in terms of the size of context information or other inputs they are able to consider, in terms of focus, and in terms of attention. This means that the more complex the subject-matter is, the less likely one may get a complete answer with one single query.

Third, the use of the reasoning engine based on the symbolic knowledge representation to steer the next use of the Al/ML model essentially allows to combine the advantages of
- symbolic artificial intelligence to which, e.g., symbolic knowledge representation like ontologies or knowledge graphs, as well as a corresponding reasoning engine, belong on the one hand; and
- sub-symbolic artificial intelligence to which neural networks, as well as large language models and other forms of generative Al, belong on the other hand.
Both are distinct approaches, each with its strengths and weaknesses.

Sub-symbolic Al may be regarded as:
- inspired by the human brain (brain neurons, neural network);
- a vast network of interconnected nodes to learn patterns in data (i.e., statistical) and make predictions (probabilistic);
- good at dealing with complex and unstructured data, such as images and speech, and thus good at tasks such as image recognition or natural language processing with high accuracy; but
- lacking transparency, having a tendency for bias, and being unable to capture common sense or causality.

Symbolic Al may be regarded as:
- precisely organizing factual information and relationships as symbolic representations;
- relying on explicit rules and algorithms to make decisions and solve problems;
- making reasonings that may be easily understood and explained by humans; but
- difficult to train with statistical learning, and
- having more difficulty at handling uncertainty or abstraction.

That is, the present method that combines the two may be regarded as "NeuroSymbolic Al".

Sub-symbolic Al and symbolic Al are also complementary in another way. Subsymbolic Al
- uses a continuous, very fine-granular knowledge representation based on embeddings that are dense, continuous, real-valued vectors in a high-dimensional "semantic" space,
- is, by virtue of the continuous representation, very sensitive,
- captures the fuzzy, probabilistic nature of relationships between concepts,
- thereby allows to navigate the semantic landscape fluidly,
- but is, on the other hand, prone to hallucinations and bias.

### Symbolic Al

- uses a discrete knowledge representation where data is represented as nodes and edges, and each concept is associated with a unique identifier,
- explicitly defines relationships in a way that ensures logical consistency,
- is particularly suitable for data that organizations or institutions have already carefully structured in a reliable, editable and explainable manner,
- relies on static facts, thereby providing a discrete, trustworthy counterpart to LLMS,
- but is, on the other hand, hard to maintain.

In a particularly advantageous embodiment, the query relates to the engineering and/or operation of an industrial plant or at least one industrial asset in this industrial plant, or to the engineering and/or performing of at least one industrial process that is executed on an industrial plant. In this domain of application, it is a very frequent occurrence that a response must comprise certain elements in order to be useful. Also, much knowledge is available in the form of a symbolic knowledge representation. For example, an industrial plant is usually built in a structured manner that can be captured by a structured representation, such as a process and instrumentation diagram, P&ID. Also, industrial assets themselves have entities that are tied together in a structured manner. For example, a reactor process module may have input ports for one or more educts, an output port for a product, a reaction vessel, a heater and a stirrer that all act together when converting the one or more educts into the product.

In particular, context information about the industrial plant, the industrial process, and/or at least one industrial asset, may be provided to the Al/ML model in addition to the query. This context information may be provided simultaneously with the query, but it may also be provided before or after the query. The context information may guide the Al/ML model into the direction of the desired response, and also provide material from which to craft the response in the first place. Much of the information that needs to be considered when working with industrial plants or industrial assets, such as technical documentation, may not have been free to download from the Internet for the general public at the time of training the Al/ML model, and may therefore not be in the scope of the training data. In particular, apart from generic manuals that apply to every such plant or every such asset, there may be plant-specific documentation that only applies to this one plant or asset.

Therefore, in particular, the context information may comprise technical documentation relating to the industrial plant, the at least one industrial asset, and/or the industrial process.

In a further particularly advantageous embodiment, the concepts that need to be instantiated as well are determined based at least in part on pre-existing knowledge about which concepts, in the domain of application at hand, usually occur together, and/or are dependent on one another, and/or mutually influence each other. In this manner, such knowledge may be seamlessly integrated into the process of refining and completing the initial response.

In a toy example from intellectual property law, if a client asks the patent attorney to protect the word "liquid" as a trademark, the pre-existing knowledge of the patent attorney dictates that he has to ask the client "for which goods and services?" First, every trademark needs to be formally tied to a set of goods and services. Second, it depends on those good and services whether the word is suitable as a trademark. The word "liquid" may serve to distinguish a microprocessor of one company from microprocessors of all other companies, but it may not serve to distinguish diesel fuel of one company from diesel fuel of all other companies because diesel fuel is always liquid.

In a simple industrial example, if the already instantiated concepts indicate that a solid educt is to be mixed with a liquid educt, then the solid educt needs to be ground first. If a solid educt is to be introduced into the process, but there is no reference whatsoever to grinding, then this may be considered to be missing, and the AI/ML model may be asked for it in the supplemental query.

In another example, if the already instantiated concepts indicate that a signal is to be transmitted via radio, the pre-existing knowledge may reveal that the frequency is a fundamental property of any radio transmission. If no frequency for the transmission may be discerned, then this may be considered to be missing, and the AI/ML model may be asked for it in the supplemental query.

In a more complex example, if the already instantiated concepts indicate that a chemical reaction of one or more educts into a product is to be performed, the pre-existing knowledge may reveal that the outcome and the speed of such a reaction are very much dependent on the temperature. Therefore, in the supplemental query, the reasoning engine may ask for the temperature of the reaction.

In a further particularly advantageous embodiment, the symbolic knowledge representation comprises a taxonomy, an ontology, and/or a knowledge graph, of concepts, and/or another domain information model of concepts. In contrast to a vocabulary that is a mere list of terms, a taxonomy makes groups of terms, e.g., "car", "truck" and "bicycle" are all members of the group "vehicles", and "factory", "mansion" and "skyscraper" are all members of the group "buildings". An ontology further comprises hierarchies and interrelationships. For example, "buildings" may comprise "residential buildings" and "industrial buildings", and "vehicles" may distinguish between "land vehicles", "air vehicles" and "sea vehicles", as well as between "motor vehicles" and "non-motor vehicles". Also, the ontology may specify what which concept (entity) can do with which other concept (entity), such as "lion may eat zebra".

In a particularly advantageous embodiment, the symbolic knowledge representation comprises, or is otherwise consistent with the standard of, a module type package, MTP, of a physical process module for a modular industrial plant, and/or another suitable description format, such as a standard, of a physical or non-physical entity related to an industrial plant. In particular, an MTP describes information and entities that are really required for putting the process module into operation (e.g., parameters that must be set for the process module to run, or a connection to a power source) on the one hand, and information and entities that are optional (e.g., parameters that will be set to defaults if not specified, or a connection to an external keyboard) on the other hand. In particular, an MTP may be used to prioritize what information needs to be procured from the ML/AI model by means of supplemental queries first. For example, while some information in the MTP is certainly nice to have in order to run a first process module in an energy-efficient manner, it is more important to get the information that is needed to get a second needed process module up and running at all.

Other exemplary information models that provide similar advantages as an MTP are an eBase information model and a Café Tool schema.

In a particularly advantageous embodiment, at least one step is performed by an ML/Al-based agent software component. This agent software component is configured to:
- receive the output of a previous step, or sub-task of a step,
- evaluate this output, and
- based on the outcome of this evaluating, trigger the next step, respectively the next sub-task.
In particular, the evaluating may comprise one or more of: (1) natural language-understanding-based agentic evaluation, and/or (2) human-feedback-integration-based evaluation, and/or (3) external tool-based evaluation.

Providing the agent software component with a certain level of autonomy in this manner reduces the need to model and anticipate the decision tree of possible constellations explicitly at the time of coding, such as with "if... then... else..." or "case..." clauses, and write an explicit handler for each and every constellation. Such explicit modelling is time-consuming and error-prone. Also, there may be no defined way of proceeding further if a constellation occurs that has been missed at the time of coding. By contrast, an agent software component may have access to Al, such as another ML/Al model or LLM, that is able to generalize to situations unseen during training. That is, the ML/Al-based agent software component can make use of its underlying LLM and NLP capabilities, that is able to generalize.

That is, in particular, the agent software component may be configured to use a ML/AI model in the evaluating of the output.

In particular, there may be different agents for different, more atomic tasks. Multiple agents may play "ping-pong" in that one agent determines what may be missing and another agent tries to get it. In this setting, it is possible that one agent criticizes the other one. In particular, one agent may determine what may be missing, and another one writes a suitable query/prompt for it, which is then executed by a third one to get a response. However, this is still a cooperative setting, rather than a competitive GAN setting.

In other words, there may be a group of machine learning-based (e.g., LLM-based) agents
- to process inputs and data,
- to map content to Knowledge (i.e., represent information according to a schema),
- to query the Knowledge (i.e., write queries w.r.t. a schema or correspondingly), and
- to trigger further information extraction (based on the queried knowledge).

This group of agents
- interact with one another (thereby transparently logging their interactions, or printing to console or outputting intermediate steps for traceability and transparency),
- allow for a human user to interfere at any point in time of the processing (e.g., to improve, clarify, confirm, or correct something), and
- can be provided unlimited or limited (time/compute) resources, to do a job (optionally up to a certain threshold of information completeness, information depth, or critical information coverage; all w.r.t. the knowledge representation).

The system comprising these agents may then further comprise a Knowledge Component
- with an ontology or information model (IM) or a knowledge graph (KG) as symbolic knowledge representation,
- with descriptions (and instantiations) of concepts/types of things in the engineering/operations domain, and with descriptions (and instantiations) of their interrelations, rules, constraints, properties, characteristics, etc.,
- with the ontology or IM or KG being optionally stored as a graph or in a graph format, and/or
- with the instance data being optionally stored (ontology-consistently) in the KG and/or in a graph DB or relational DB.

The Knowledge Component may, with respect to information about instances, comprise different information representation measures and KPIs, such as
- information completeness, i.e., to which extend (TBox/ABox percentage) or how many (in absolute numbers) abstract concepts/types (of the TBox) are instantiated by means of real instance information/values (the ABox), and/or
- information depth, i.e., from the hierarchical perspective, how far down from the root node (or from a node of interest) is the ontology/knowledge graph (KG) populated with instance information, and/or
- critical information coverage, i.e., if some information is tagged/annotated in the ontology/IM/KG as "critical/essential/required" vs. "optional" or "nice-to-have".

That is, the Knowledge Component may perform part of the function of the reasoning engine in that it may determine concepts that need to be instantiated as well.

The system may comprise a Knowledge Completer Component
- that may be an information model (ontology)-based and information model (ontology)-driven system and method (optionally with graphical or language user interface) that allows for formal/logical/semantic reasoning, and/or
- that can do reasoning to infer implicit knowledge (e.g., by propagating explicit knowledge from instance data along the concepts and relations and triples and rules of the ontology / IM, thus finding out further implicit instance information), and/or
- that can help to extract and augment and further-complement/complete the available formally-represented ontological information, e.g., by means of (based on the symbolic Al part) "finding the instantiation gaps in the KG" and by thereon-based (using the Subsymbolic Al part) accordingly formulating reasonable querying prompts or search requests, which then get executed, in order to then identify the content which allows to yield a suitable response; and/or
- that can then populate the KG with the additional "response content" (i.e., additional instance information), thus filling the respectively previously identified gap, ... repeating this, to again and again fill yet another gap, until no further information can be extracted from the input documents.

That is, the Knowledge Completer Component may comprise further functionality of the reasoning engine, in particular in determining, by reasoning, further to-be-instantiated concepts. It may also take care of determining supplemental queries, providing them to the ML/AI model or any other suitable information source, and evaluating the supplemental responses.

As discussed before, the agentic setup is particularly advantageous for autonomous information processing without having to specify a decision tree already at the time of coding. To this end, one may have one or more respectively responsible agents (with suitably defined roles and tasks and tool access) for all above-described steps/tasks, and to have these agents in turn collaborate and interact with each other (i.e., to flexibly react on their respective results, and to further process these).

For example, focusing on the "Knowledge Completer Component", there may be one or more of the following:
- one (or more) agent(s) responsible of triggering/executing as a tool the semantic reasoning engine based on the available knowledge (i.e., the ontology/information model (IM) and/or KG) in order to propagate explicit knowledge and identify further implicit knowledge (about instance data),
- one (or more) agent(s) responsible of identifying instantiation gaps in the KG, and of formulating reasonable querying prompts or search requests which can then get executed, in order to then identify the content which allows to yield a suitable response to fill these gaps),
- one (or more) agent(s) responsible of executing the querying prompts or search requests, in order to then identify the content which allows to yield a suitable response,
- one (or more) agent(s) responsible of then populating the KG with the additional "response content" (i.e., additional instance information), thus filling the respectively previously identified gap,
- optionally, a manager agent, to make the above-mentioned agents repeat these steps, to again and again fill yet another gap, until no further information can be extracted from the input documents, and
- optionally, one (or more) agent(s) responsible of additionally comparing (either pro-actively, or only on-demand and/or as support for increasing robustness) historical data about similar contents (e.g., a process plant or components thereof), thus triggering better or more target-oriented query formulations.

Thus, the agentic setup serves to
- better automate the "ping-pong" game between the Symbolic Al parts (ontology, IM, KG, reasoning engine, ...) and the Subsymbolic AI parts (ML algorithms, NNs, LLMs, GenAl, ...);
- make this "ping-pong" game more robust, and
- allow for flexibly dealing with the variations in the data.

In a further particularly advantageous embodiment, the determining of supplemental queries, and the providing of the same to the Al/ML model, is continued until a predetermined termination criterion is satisfied. In this manner, the initial response obtained from the Al/ML model may be performed step by step until it is fully usable for further use in the application at hand, or only few information is left to be procured from an expert. As discussed before, the step-by-step refinement allows to put limited resources of the AI/ML model in terms of context window, attention or focus to a better use by using them time and time again.

In particular, after the first supplemental query has been provided to the Al/ML model and the supplemental response has been obtained, it is not guaranteed that this already shrinks the set of concepts that need to be instantiated. For example, if one to-be-instantiated concept is instantiated, this may be dependent on more concepts that then need to be instantiated. That is, closing one "hole" may open one or more new ones. This is in some way analogous to a Python environment where multiple rounds of "pip install" are applied and the installing of a package to satisfy one dependency may cause requirements for still further packages to appear. But after a some iterations, the total number of open "holes" will progressively decrease.

One possible exemplary termination criterion is that that there are, according to the symbolic knowledge representation, no more concepts that still need to be instantiated, or a least less than a predetermined number or set of concepts still needs to be instantiated. Optionally, this criterion may be refined further in that at least a certain set of concepts should not have "gaps" that still need to be instantiated. That is, the termination criterion may also comprise that a least a given set of required concepts is instantiated (populated). In particular, "required" may be an annotation property to the respective concept, meaning that it MUST be specified in order to be able/allowed to thereon-based continue the process (next steps) of automation engineering).

Another possible exemplary termination criterion is a maximum number of iterations. This guarantees a response in a certain amount of time, and in particular avoids endless loops.

In a further particularly advantageous embodiment, an operator or engineer, or other human user, is prompted for information regarding at least one concept that, according to the symbolic knowledge representation, remains to be instantiated. It is not guaranteed that all required information will be found in an automated manner. But if at least most of the information is obtained from the ML/Al model, then the expert is already relieved from a lot of routine work.

Apart from the ML/Al model, the reasoning engine may also avail itself of further information sources. In a further particularly advantageous embodiment, the reasoning engine is further configured to obtain information regarding at least one concept that, according to the symbolic knowledge representation, remains to be instantiated from a historical database that comprises information about possibly similar concepts. For example, the historical database may comprise information about other (possibly similar) industrial process plants or parts of these, or related relevant information (e.g., about modular components, about typical process setups, about topological relations, about material processing steps, cause-and-effect / interlock setups, alarm setups, etc..

Alternatively or in combination to this, the reasoning engine may be configured to obtain the information from an analysis tool that is configured to: compare a present situation with situations stored in the historical database, and suggest information regarding the to-be-instantiated concept based at least on part on a result of this comparison. For example, the reasoning engine may find similarities between current and historical content or typical frequently occurring patterns, e.g., typical process specs/requirements for the processing of Hydrogen, or typical optional modular components like a water treatment or gas treatment unit, etc.. This allows, e.g., to suggest typical "completions" of the currently-available (populated) knowledge graph; either pro-active, or only on-demand as support for the setting-up of the queries to the subsymbolic Al part (only if needed, and in order to not bias the subsymbolic Al part with pro-active suggestions too much).

In a further particularly advantageous embodiment, an actuation signal is computed from the response. At least one industrial asset in an industrial plant may then be actuated based on the actuation signal. For example, a valve may be opened or closed, equipment may be switched on or off, or a set-point value for a low-level controller that keeps a certain process variable at this set-point value may be modified. Alternatively or in combination to this, a physical influence may be exerted on an industrial process executed by the industrial plant in any other suitable manner based on the actuation signal.

Because it may be fully or at least partially computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

As discussed before, the present system and method enable the autonomous execution of the triggering of "providing & extracting further missing pieces of information" and then the actual information extraction process, in order to achieve maximally possible information extraction (or extraction to the wanted extent, respectively).

An "Engineering Data Funnel", EDF, a tool that brings data from disparate formats into some common format for later use, e.g., a nice JSON that is machine-readable for any other purpose, will already do a great job in extracting information from Engineering Process Control, EPC, documents. However, the proposed system and method allow to wrap the EDF into a NeuroSymbolic Loop, thus exploiting both symbolic Al capabilities (like formal representation of information according to ontologies or IMs, and doing semantic/logic reasoning, to further complement information and fill 'gaps') and subsymbolic Al capabilities (like data analytics, like pattern analysis, like formulating rea-sonable prompts or queries for LLMs/GenAl apps in order to complement formal representations). This is very analogous to what the human brain and/or a group of (interacting) human experts would do, too!

The use of said EDF is not required in connection with the present method. Rather, the system and method may also be transferred and applied to other areas in the industrial context, too.

For example, if the EDF has processed a set of EPC documents into a merged, structured representation of the contained information, then this here proposed NeuroSymbolic Al system can - by means of its Symbolic Reasoning Al part - check, what information is still missing for completion of the 'generally' available ontological domain representation, and then make the Subsymbolic Al part of the system (i.e., the NLP part, or the LLM) query the EPC documents again, to find out whether or not the missing pieces of information are contained or not. The "ping-pong" between the two parts (Subsymbolic Al and Symbolic Al parts) and the information processing and/or reasoning within the respective parts, will again be triggered by means of the agentic setup, i.e., by the LLM-based agents.

### DESCRIPTION OF THE FIGURES

In the following, the invention is illustrated using Figures without any intention to limit the scope of the invention. The Figures show:
Figure 1: Exemplary embodiment of the method 100 retrieving a response 3 to a query 1 from a machine learning/artificial intelligence model, ML/Al model 2;
Figure 2: Exemplary augmentation of a symbolic knowledge representation 4 by identifying to-be-instantiated concepts 5# and obtaining a supplemental response 3* to a supplemental query 1* from the ML/Al model 2.

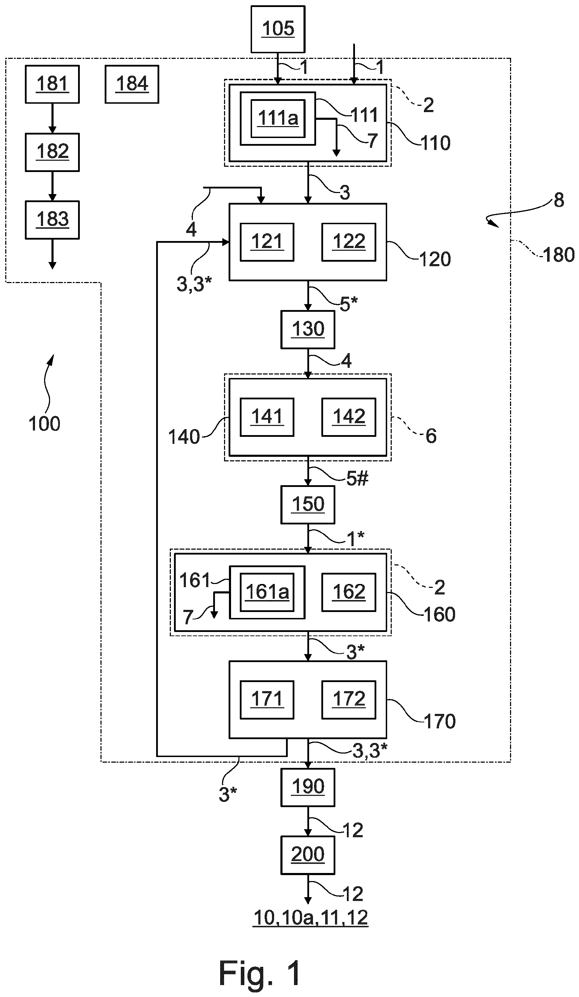

Figure 1 is a schematic flow chart of an exemplary embodiment of the method 100 for retrieving a response 3 to a query 1 from a machine learning/artificial intelligence model, ML/Al model 2.

In particular, according to block 105, the query 1 may relate to the engineering and/or operation of an industrial plant 10 or at least one industrial asset 11 in this industrial plant 10, or to the engineering and/or performing of at least one industrial process 10a that is executed on an industrial plant 10.

In step 110, the query 1 is provided to the ML/Al model 2. The ML/Al model 2 then produces an initial response 3.

According to block 111, context information 7 about the industrial plant 10, the industrial process 10a, and/or at least one industrial asset 11, may be provided to the ML/AI model 2 in addition to the query 1. In particular, according to block 111a, this context information 7 may comprise technical documentation relating to the industrial plant 10, the at least one industrial asset 11, and/or the industrial process 10a.

In step 120, based on the initial response 3, instances of concepts 5* of a given symbolic knowledge representation 4 that the initial response 3 relates to are determined.

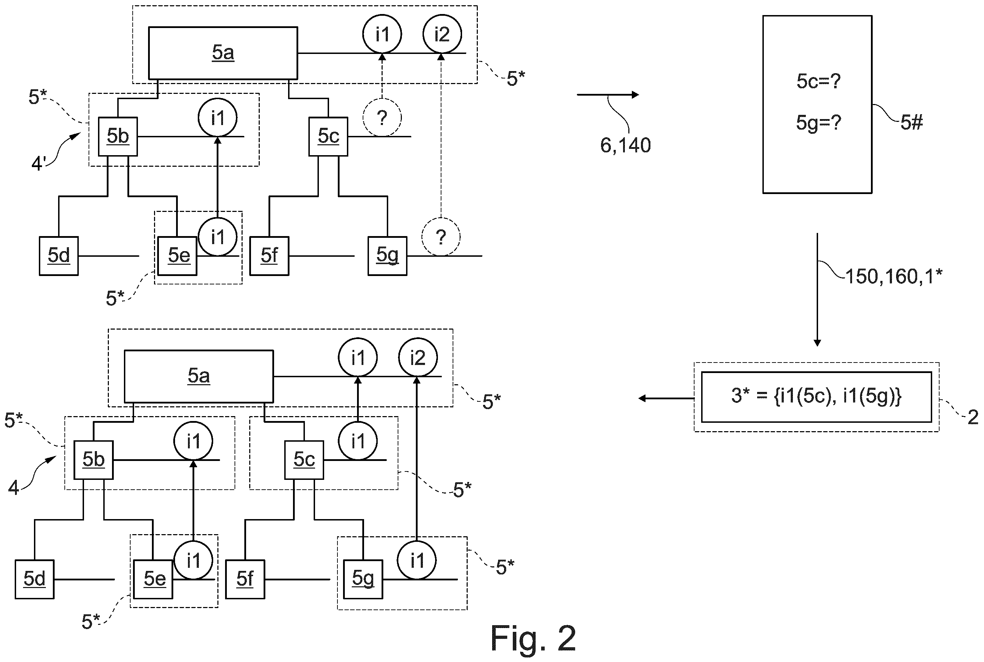

According to block 121, the symbolic knowledge representation 4 may comprise a taxonomy, an ontology, and/or a knowledge graph, of concepts 5a-5g, and/or another domain information model of concepts 5a-5g. An example of such a knowledge graph is shown in Figure 2.

According to block 122, the symbolic knowledge representation 4 may comprise, or be otherwise consistent with the standard of, a module type package, MTP, of a physical process module for a modular industrial plant 10, and/or another suitable description format of a physical or non-physical entity related to an industrial plant 10.

In step 130, in the symbolic knowledge representation 4, each concept 5* that the initial response 3 relates to is marked as instantiated.

In step 140, a reasoning engine 6 determines concepts 5# of the symbolic knowledge representation 4 that, given the set of presently instantiated concepts 5*, need to be instantiated as well.

According to block 141, these concepts 5# that need to be instantiated as well may be determined based at least in part on pre-existing knowledge about which concepts 5a-5g, in the domain of application at hand, usually occur together, and/or are dependent on one another, and/or mutually influence each other.

According to block 142, the reasoning engine 6 may further be configured to obtain information regarding at least one concept 5# that, according to the symbolic knowledge representation 4, remains to be instantiated
- from a historical database that comprises information about possibly similar concepts, and/or
- from an analysis tool that is configured to: compare a present situation with situations stored in the historical database, and suggest information regarding the to-be-instantiated concept based at least on part on a result of this comparison.

In step 150, a supplemental query 1* for information relating at least one concept 5# that needs to be instantiated as well is determined.

In step 160, this supplemental query 1* is provided to the ML/Al model 2. In this manner, a supplemental response 3* that augments the initial response 3 is obtained.

According to block 161, context information 7 about the industrial plant 10, the industrial process 10a, and/or at least one industrial asset 11, may be provided to the ML/AI model 2 in addition to the supplemental query 1*. In particular, according to block 161a, this context information 7 may comprise technical documentation relating to the industrial plant 10, the at least one industrial asset 11, and/or the industrial process 10a.

According to block 162, an operator or engineer, or another human user, may be prompted for information regarding at least one concept 5# that, according to the symbolic knowledge representation 4, remains to be instantiated.

In step 170, the determining of further supplemental queries 1*, and the providing of the same to the ML/Al model 2, may be continued until a predetermined termination criterion is satisfied. That is, with the supplemental response 3* in hand, the method may branch back to steps 120 and 130 and determine the newly instantiated concepts 5* before determining, in step 140, the new situation regarding to-be-instantiated concepts 5# and formulating a new supplemental query 1* in step 150 to be submitted in step 160.

According to block 171, the termination criterion may comprise that there are, according to the symbolic knowledge representation, no more concepts 5# that need to be instantiated, or at least less than a predetermined number of concepts 5# that need to be instantiated.

According to block 172, the termination criterion may comprise a maximum number of iterations.

According to block 180, one or more of the steps 110-170 mentioned above may be performed by an agent software component that is configured to:
- receive, according to block 181, the output of a previous step 110-170, or sub-task of a step 110-170,
- evaluate, according to block 182, this output (e.g., in the manners discussed above), and
- based on the outcome of this evaluating, trigger, according to block 183, the next step 110-170, respectively the next sub-task.

According to block 184, the agent software component may be configured to use a ML/AI model 2 in the evaluating of the output. For example, this may be the same ML/AI model that is used to process the query 1 into the initial response 3, or to process the supplemental query 1* into the supplemental response 3*.

In step 190, an actuation signal 12 may be computed from the response 3, and any supplemental responses 3*.

In step 200, at least one industrial asset 11 in an industrial plant 10 may be actuated based on the actuation signal 12. Alternatively or in combination to this, a physical influence may be exerted on an industrial process 10a executed by the industrial plant 10 in any other suitable manner, based on the actuation signal 12.

Figure 2 illustrates on a simple example of a symbolic knowledge representation 4 how a population of this symbolic knowledge representation 4 with instances may be refined using supplemental queries 1*. The symbolic knowledge representation 4 may, for example, relate to an industrial plant.

The top left corner of Figure 2 shows the initial state of the symbolic knowledge representation 4 after the initial response 3 to the initial query 1 has been processed. In the example shown in Figure 2,the symbolic knowledge representation 4 comprises seven concepts 5a-5g. Each concept is drawn as a box with a rack extending from its right-hand side for putting "instance cards" on. According to the initial response 3, concept 5a has two instances i1 and i2, concept 5b has one single instance i1, and concept 5e also has one single instance i1. The instance i1 of concept 5b functionally depends on the instance i1 of concept 5e.

The instance i1 of concept 5a is dependent on an instance of the concept 5c, but such an instance is missing. Likewise, the instance i2 of concept 5a is dependent on an instance of the concept 5g, but this instance is missing.

This is noticed by the reasoning engine 6 when the state of the symbolic knowledge representation 4 is analyzed in step 140. The concepts 5c and 5g emerge as to-be-instantiated concepts 5#. In step 150, a supplemental query 1* is formulated to get information on instances of these concepts 5#. In step 160, this supplemental query 1* is submitted to the ML/Al model 2 to get a supplemental response 3*.

In the example shown in Figure 2, this supplemental response 3* comprises one instance i1 of the concept 5c and one instance i1 of the concept 5g.

The effect on the symbolic knowledge representation 4 is shown in the bottom left corner of Figure 2. Now the concepts 5c and 5g also each have one instance i1 on their respective racks. The dependency of the instance i1 of concept 5a on an instance of concept 5c, as well as the dependency of the instance i2 of concept 5a on an instance of concept 5g, are now fulfilled. That is, in the example shown in Figure 2, the combination of the initial response 3 and the supplemental response 3* constitutes a complete response for the application at hand, e.g., operation of the industrial plant that is represented by the symbolic knowledge representation 4.

### List of reference signs:

- 1: query
- 1*: supplemental query
- 2: machine learning/artificial intelligence model, ML/Al model, such as GMLM
- 3: response to query 1
- 3*: response to supplemental query 3
- 4: symbolic knowledge representation
- 5a-5g: concepts (entities) in symbolic knowledge representation
- 5*: instantiated concepts (entities) 5a-5g
- 5#: to-be-instantiated concepts (entities) 5a-5g
- 6: reasoning engine
- 7: context information
- 8: agent software component
- 10: industrial plant
- 10a: industrial process executed on industrial plant
- 11: industrial asset in industrial plant 10
- 12: actuation signal
- 100: method for retrieving response 3 to query 1
- 105: choosing query 1 from industrial domain of application
- 110: providing query 1 to ML/Al model 2
- 111: providing context information 7 to ML/Al model 2 as well
- 111a: choosing context information 7 with technical information
- 120: determining instantiated concepts 5* from initial response 3
- 121: choosing particular kinds of symbolic knowledge representation 4
- 122: choosing symbolic knowledge representation 4 with MTP
- 130: marking instantiated concepts 5* in symbolic knowledge representation 4
- 140: determining to-be-instantiated concepts 5#
- 141: determining concepts 5# based on pre-existing knowledge
- 142: using other information sources in reasoning engine 6
- 150: determining supplemental query 1*
- 160: providing supplemental query 1* to ML/Al model
- 161: providing context information 7 to ML/Al model 2 as well
- 161a: choosing context information 7 with technical information
- 162: prompting operator for missing information about concepts 5#
- 170: continuing to determine supplemental queries 1*
- 171: using filling of gaps as termination criterion
- 172: using number of iterations as termination criterion
- 180: implementing functionality in agent software component 8
- 190: computing actuation signal 12
- 200: actuating plant 10, process 10a, asset 11 with actuation signal 12

## Claims

1. A computer-implemented method (100) for retrieving a response (3) to a query (1) from a machine learning/artificial intelligence model, ML/Al model (2), the method (100) comprising the steps of:
• providing (110) the query (1) to the ML/Al model (2), thereby obtaining an initial response (3);
• determining (120), from the initial response (3), instances of concepts (5*) of a given symbolic knowledge representation (4) that the initial response (3) relates to;
• marking (130), in the symbolic knowledge representation (4), each concept (5*) that the initial response (3) relates to as instantiated;
• determining (140), by a reasoning engine (6), concepts (5#) of the symbolic knowledge representation (4) that, given the set of presently instantiated concepts (5*), need to be instantiated as well;
• determining (150) a supplemental query (1*) for information relating at least one concept (5#) that needs to be instantiated as well; and
• providing (160) this supplemental query (1*) to the ML/Al model (2), thereby obtaining a supplemental response (3*) that augments the initial response (3).

2. The method (100) of claim 1, wherein the query (1) relates (105) to the engineering and/or operation of an industrial plant (10) or at least one industrial asset (11) in this industrial plant (10), or to the engineering and/or performing of at least one industrial process (10a) that is executed on an industrial plant (10).

3. The method (100) of claim 2, wherein context information (7) about the industrial plant (10), the industrial process (10a), and/or at least one industrial asset (11), is provided (111, 161) to the ML/Al model (2) in addition to the query (1, 1*).

4. The method (100) of claim 3, wherein the context information (7) comprises (111a, 161a) technical documentation relating to the industrial plant (10), the at least one industrial asset (11), and/or the industrial process (10a).

5. The method (100) of any one of claims 1 to 4, wherein the concepts (5#) that need to be instantiated as well are determined (141) based at least in part on pre-existing knowledge about which concepts (5a-5g), in the domain of application at hand, usually occur together, and/or are dependent on one another, and/or mutually influence each other.

6. The method (100) of any one of claims 1 to 5, wherein the symbolic knowledge representation (4) comprises (121) a taxonomy, an ontology, and/or a knowledge graph, of concepts (5a-5g), and/or another domain information model of concepts (5a-5g).

7. The method (100) of any one of claims 1 to 6, wherein the symbolic knowledge representation (4) comprises (122), or is otherwise consistent with the standard of, a module type package, MTP, of a physical process module for a modular industrial plant (10), and/or another suitable description format of a physical or non-physical entity related to an industrial plant (10).

8. The method (100) of any one of claims 1 to 7, wherein at least one step (110-170) is performed (180) by an ML/Al-based agent software component that is configured to:
• receive (181) the output of a previous step (110-170), or sub-task of a step (110-170),
• evaluate (182) this output, and
• based on the outcome of this evaluating, trigger (183) the next step (110-170), respectively the next sub-task.

9. The method (100) of claim 8, wherein the agent software component (8) is configured (184) to use a machine learning/artificial intelligence model, ML/AI model (2), in the evaluating of the output.

10. The method (100) of any one of claims 1 to 9, further comprising: continuing (170) the determining of further supplemental queries (1*), and the providing of the same to the ML/Al model (2), until a predetermined termination criterion is satisfied.

11. The method (100) of claim 10, wherein the predetermined termination criterion comprises
• that there are, according to the symbolic knowledge representation, no more, or less than a predetermined number or set of, concepts (5#) that need to be instantiated (171) ; and/or
• a maximum number of iterations (172); and/or
• that at least a given required set of concepts is instantiated.

12. The method (100) of any one of claims 1 to 11, further comprising: prompting (162) an operator or engineer for information regarding at least one concept (5#) that, according to the symbolic knowledge representation (4), remains to be instantiated.

13. The method (100) of any one of claims 1 to 12, wherein the reasoning engine (6) is further configured to obtain (142) information regarding at least one concept (5#) that, according to the symbolic knowledge representation (4), remains to be instantiated
• from a historical database that comprises information about possibly similar concepts, and/or
• from an analysis tool that is configured to: compare a present situation with situations stored in the historical database, and suggest information regarding the to-be-instantiated concept based at least on part on a result of this comparison.

14. The method (100) of any one of claims 1 to 13, further comprising:
• computing (190), from the response (3), an actuation signal (12); and
• actuating (200) at least one industrial asset (11) in an industrial plant (10), and/or otherwise exerting a physical influence on an industrial process (10a) executed by the industrial plant (10), based on the actuation signal (12).

15. A computer program, comprising machine-readable instructions that, when executed by one or more computers and/or compute instances, causes the one or more computers to perform the method (100) according to any one of claims 1 to 14.

16. A non-transitory machine-readable data carrier, and/or a download product, with the computer program of claim 15.

17. One or more computers and/or compute instances with the computer program of claim 15, and/or with the machine-readable data carrier and/or download product of claim 16.
